# EUROPÄISCHE PATENTANMELDUNG

(11) **EP 1 775 613 A1**
(43) Veröffentlichungstag der Anmeldung: **18.04.2007**
(21) Anmeldenummer: 06021282.6
(22) Anmeldetag: 11.10.2006
(51) Int. Cl.: G02B 7/00, G02B 23/16, G03B 17/48, G03B 17/56

(54) **Vorrichtung zur Befestigung von Bildaufnahmegeräten an einem Beobachtungsfernrohr**

(30) Priorität: 13.10.2005 DE 102005049405; 04.01.2006 DE 102006000754
(71) Anmelder: Leica Camera AG, 35606 Solms (DE)
(72) Erfinder: Ehmes, Ulrich, 4150-000 Porto (PT); Albrecht, Stephan, 35394 Gießen (DE); Sehrt, Arno, 35580 Wetzlar (DE); Ferreira, Miguel, 4760 261 Brufe VNF (PT)
(74) Vertreter: Stamer, Harald

(57) **Zusammenfassung**

Es wird eine Vorrichtung (1) zur Befestigung unterschiedlicher Bildaufnahmegeräte an einem Beobachtungsfernrohr mit auswechselbaren Okularen beschrieben, die zwei zueinander koaxial gelagerte, axial verschiebbar geführte Zylinder (2,3) aufweist, wobei der eine Zylinder (3) am Okulargehäuse befestigbar ist und der andere Zylinder (2) zur Halterung eines Bildaufnahmegeräts eine seitlich zur Zylinderachse versetzt angeordnete Klemmvorrichtung (13) aufweist.

## Beschreibung

Die Erfindung betrifft eine Vorrichtung zur Befestigung unterschiedlicher Bildaufnahmegeräte an einem Beobachtungsfernrohr mit auswechselbaren Okularen.

Beobachtungsfernrohre können neben der visuellen Beobachtung auch als Objektive großer Brennweite und damit hoher Vergrößerung für Bildaufnahmegeräte verwendet werden.

Bei handelsüblichen Fernrohren ist kein Anschluss zur Befestigung eines Bildaufnahmegeräts, wie z.B. einer analogen oder digitalen fotografischen Kamera, eines Camcorders oder dergleichen vorgesehen. Aus diesem Grund sind eine Vielzahl von Hilfskonstruktionen und Adaptern bekannt geworden, um eine Kamera mit einem Fernrohr zu verbinden.

Eine bekannte Möglichkeit besteht darin, das auswechselbare Okular eines Fernrohrs zu entfernen und durch einen aufschraubbaren oder anrenkbaren Adapter zu ersetzen. Der Adapter weist eine aufwändige, die Okularoptik ersetzende Linsenanordnung und einen Bajonettanschluß zur Aufnahme der Kamera auf. Derartige Adapter sind wegen der notwendigen optischen Bauelemente teuer und zudem ausschließlich für die Verwendung bestimmter mit einem passenden Bajonettanschluss versehener Kameras geeignet. Soll weiterhin eine Beobachtung des aufzunehmenden Objektes mit dem Fernrohr möglich sein, muss diese durch den Sucher der Kamera erfolgen und setzt daher die Verwendung einer Spiegelreflexkamera voraus.

Aus US 5,053,794 ist ein Adapter einfacherer Ausgestaltung bekannt, welcher direkt auf dem Okular des Fernrohrs befestigt wird. Das Objektiv der Kamera wird mit seinem Filteraufnahmegewinde auf den Adapter geschraubt. Die fluchtende Ausrichtung der optischen Achse des Objektivs der Kamera zu der des Fernrohrs erfolgt durch eine über drei Stellschrauben radial einstellbare Metallfeder im Okularbereich des Adapters. Es können nur Kameras mit Objektiven verwendet werden, die ein normiertes Filteraufnahmegewinde aufweisen. Andernfalls sind weitere Adapterzwischenringe erforderlich. Moderne digitale Kompaktkameras ohne Filtergewinde können nicht verwendet werden.

Aus DE 102 44 669 A1 ist eine Vorrichtung zum Halten einer Kamera hinter einem Fernglas bekannt, wobei die Kamera zwischen einer Aufnahme- und einer Widergabeposition verschwenkbar ist. Die Vorrichtung besteht aus einer aufwändigen mechanischen Konstruktion, die mit einer Schraube am Stativgewinde des Fernrohrs befestigt wird. Die Vorrichtung kann an einem Fernrohr ohne Stativgewinde nicht verwendet werden. Sie ist schwer und unhandlich. Die Kamera wird über eine komplizierte, aus mehreren längen-, höhen- und seitenverstellbaren Schienenelementen bestehende Mechanik hinter dem Okular des Fernrohrs justiert. Eine Umstellung des aufgenommenen Bildes von Hoch- auf Querformat ist nicht möglich. Zur Befestigung an der Vorrichtung muss die Kamera über ein Stativgewinde verfügen. Der Einsatzbereich dieser Vorrichtung ist daher auf wenige Kameramodelle beschränkt.

Aus EP 1 477 763 A1 ist bekannt, eine am Okular des Fernrohrs anklemmbare Klappvorrichtung zur Halterung einer Kamera vorzusehen. Das Okular kann aufgrund des daran befestigten Adapters nicht gewechselt werden, ohne zuvor den Adapter zu entfernen. Die Ausrichtung der Kamera hinter dem Okular des Fernrohrs erfolgt ebenfalls über eine längen-, höhen- und seitenverstellbare Kamerahalterung. Hochformatige Bildaufnahmen sind bei unveränderter Fernrohrausrichtung nicht möglich. Die Kamera wird auch bei dieser Vorrichtung mit einer Schraube befestigt, die in das Stativgewinde der Kamera eingreift. Kameramodelle ohne Stativgewinde können auf dieser Vorrichtung nicht befestigt werden.

Aus DE 297 22 332 U1 ist ein Adapter zur Anpassung eines optischen Bilderzeugungssystems bekannt, der auf seiner einen Seite mit dem Filtergewinde eines Objektivs einer Kamera und auf seiner anderen Seite mit dem Bildausgang des optischen Bilderzeugungssystems verbunden werden kann. Der Adapter besitzt einen in seiner Länge veränderbaren Tubus, welcher eine aus einer oder mehreren Linsen bestehende Bildanpassungsoptik enthält.

US 6,781,630 B2 beschreibt ein aus einem ersten und einem zweiten Adapterteil bestehendes Adaptersystem, welches ebenfalls einen in seiner Länge veränderbaren Tubus aufweist und eine Optik zur Abbildungsbeeinflussung enthält. Der Adapter dient dem Ansetzen einer Digitalkamera an ein Mikroskop.

Aufgabe der Erfindung ist es, eine universell einsetzbare, leicht zu handhabende, nicht auf einzelne spezielle Bildaufnahmegeräte eingeschränkt nutzbare und gleichzeitig kostengünstig herstellbare Vorrichtung zur Befestigung unterschiedlichster Bildaufnahmegeräte an einem Beobachtungsfernrohr zur Verfügung zu stellen.

Diese Aufgabe wird erfindungsgemäß bei einer Vorrichtung der eingangs genannten Art dadurch gelöst, dass die Vorrichtung zwei zueinander koaxial gelagerte, axial verschiebbar geführte Zylinder aufweist, wobei der eine Zylinder am Okulargehäuse oder über eine das Okulargehäuse umschließende Adaptervorrichtung am Gehäuse des Beobachtungsfernrohrs befestigbar ist und der andere Zylinder zur Halterung eines Bildaufnahmegeräts eine seitlich zur Zylinderachse versetzt angeordnete Klemmvorrichtung aufweist. Die zueinander koaxial gelagerten und verschiebbar geführten Zylinder ermöglichen auf einfache Weise eine Längenverstellung der Vorrichtung. Bildaufnahmegeräte mit unterschiedlichen Objektivlängen und Brennweiten können verwendet werden, da ihre Objektivvorbauten in die Zylinder eintauchen können. Die Objektive lassen sich auf diese Weise in einem axialen Abstand zum Okulargehäuse positionieren, der eine gute Abbildung ergibt. Die Befestigung des Zylinders am Okulargehäuse ermöglicht eine unkomplizierte Montage und Demontage der Vorrichtung am Fernrohr. Eine alternative, besonders einfach handhabbare Ausführung der Erfindung besteht darin, eine über beispielsweise zwei Klemmschrauben dauerhaft am Gehäuse des Beobachtungsfernrohrs befestigbare, das Okulargehäuse umschließende Adaptervorrichtung zur Ankoppelung des Zylinders vorzusehen. Die Adaptervorrichtung weist in Ihrem Ankoppelbereich eine Steck- Einschnappverbindung zur reproduzierbaren und drehgesicherten Befestigung des Zylinders an der Adaptervorrichtung und damit in Bezug auf die optische Achse des Okulars auf. Es ist nicht erforderlich, dass das Fernrohr ein Stativgewinde zur Befestigung der Vorrichtung aufweist. Eine seitlich zur Zylinderachse versetzt angeordnete Klemmvorrichtung ermöglicht in vorteilhafter Weise die Halterung nahezu aller Bildaufnahmegeräte, auch solcher ohne Stativgewinde wie z.B. Fotohandys. Die Angriffsposition der Klemmvorrichtung an den Gehäuseflächen des Bildaufnahmegeräts lässt sich durch Drehen der Vorrichtung um die Zylinderachse auf einfache Weise variieren. Bei herkömmlichen Kameras, die üblicherweise rechteckig ausgebildet sind, wird der in Blickrichtung des Fotografen linkseitig des Aufnahmeobjektivs gelegene Gehäusebereich mit der linken Hand gehalten und der oben, rechtsseitig des Aufnahmeobjektivs gelegene Auslöseknopf ist mit der rechten Hand betätigbar. Zur Halterung solcher Kameras kann die Klemmvorrichtung in vorteilhafter Weise durch Drehen der Vorrichtung in eine Stellung linksseitig der Zylinderachse gebracht werden, so dass sie im linksseitigen Gehäusebereich die Kamera von oben und unten her einklemmt. Die Bedienelemente, insbesondere der Auslöseknopf sind dann auf der rechten Kameraseite gut zugänglich. Auf diese Weise können sowohl Bilder im Querformat aufgenommen werden, als auch nach einfacher Drehung der Vorrichtung um 90° Bilder im Hochformat. Nach dieser Drehung befindet sich die Klemmvorrichtung in Blickrichtung oberhalb oder unterhalb der Zylinderachse und ergreift die Gehäusebereiche der Kamera von links und von rechts. Diese Ausrichtung der Vorrichtung ist hervorragend geeignet zur Halterung von Fotohandys.

In einer vorteilhaften Ausgestaltung der Vorrichtung ist der die Klemmvorrichtung tragende Zylinder als Außenzylinder auf einem am Okulargehäuse befestigbaren Innenzylinder gerade geführt. Eine einmal durchgeführte rotatorische Ausrichtung der Klemmvorrichtung zum Okulargehäuse, entweder zur Bildaufnahme im Querformat oder im Hochformat, bleibt aufgrund der Geradführung auch bei Veränderung des axialen Abstandes durch Verschiebung des Außenzylinders auf dem Innenzylinder erhalten. Zur besseren Bedienbarkeit ist der die Klemmvorrichtung tragende Zylinder als Außenzylinder ausgebildet. Auf diese Weise wird eine axiale Verschiebung der Klemmvorrichtung sowohl durch Ergreifen der Klemmvorrichtung, als auch durch Ergreifen des Außenzylinders ermöglicht.

In einer weiteren Ausgestaltung der Vorrichtung ist der Außenzylinder in variierbaren Auszugsstellungen am Innenzylinder feststellbar. Besonders vorteilhaft können auf dem Innenzylinder Markierungen vorgesehen sein, die ein Auffinden von früher ermittelten, idealen Auszugsstellungen für bestimmte Bildaufnahmegeräte erleichtern.

In einer vorteilhaften Ausgestaltung der Vorrichtung ist zur Feststellung des Außenzylinders am Innenzylinder eine erste Schraubklemmverbindung mit einer den Außenzylinder gegen den Innenzylinder klemmenden Feststellmutter vorgesehen. Die Feststellmutter wirkt in dieser Anordnung mit einem am Innenzylinder befestigten Gewindestab zusammen, der gleichzeitig als Führungsstift einer Stift- Schlitzverbindung wirkt und auf diese Weise eine Geradführung bildet.

Bei einer besonders vorteilhaften Ausgestaltung der Vorrichtung weist der Innenzylinder okularseitig eine oder mehrere auf dem Umfang angeordnete Orientierungsausnehmungen auf. Vorzugsweise vier in gleichmäßigen Abständen auf dem Umfang angeordnete Orientierungsausnehmungen erleichtern insbesondere die senkrechte oder horizontale Ausrichtung der Klemmvorrichtung zu den Bildkanten. Die Breite der Orientierungsausnehmungen ist in vorteilhafter Weise an die Gehäusebreite von eventuell am Okulargehäuse des Fernrohres vorhandenen Verriegelungsmechaniken angepasst. Auch nachträglich am Okulargehäuse angebrachte Orientierungsklötzchen können die Ausrichtung erleichtern. Alternativ oder zusätzlich ist am Innenzylinder okularseitig eine weitere Schraubklemmvorrichtung zur Befestigung am Okulargehäuse vorgesehen. In vorteilhafter Weise drückt dabei eine Schraube auf einen breiten, in einer innen am Innenzylinder angeformten radialen Nut integrierten Kunststoffsprengring, um eine möglichst gleichmäßig auf den Umfang des Okulargehäuses einwirkende Kraft zu erzeugen. Der Kunststoffsprengring ist durch einen Sicherungsstift gegen Verrutschen in der Nut gesichert. Auf diese Weise ist eine sichere Befestigung der Vorrichtung auch bei Aufnahme einer schweren Kamera möglich.

Eine sichere Klemmung wird auch durch eine über eine Schraubverbindung betätigbare kreissegmentförmige Klemmbacke erzielt, die ebenfalls in einer innen am Innenzylinder angeformten Radialnut geführt ist.

Zur Verstellung eines Zoom-Okulars sind idealerweise eine oder mehrere Bedienöffnungen am Innenzylinder vorgesehen. Im Bereich dieser Bedienöffnungen weist der Außenzylinder korrespondierende Ausnehmungen auf, die den Zugriff auf den Zoom-Ring des Okulars auch bei zusammen geschobenen Zylindern ermöglicht. Zwei diametral gegenüber liegende Bedienöffnungen erleichtern die gleichzeitige Betätigung mit Daumen und Zeigefinger.

Bei einer weiteren Ausgestaltung der Erfindung weist der Innenzylinder an seinem dem Außenzylinder zugeordneten Ende eine nach innen überstehende Randfläche zur Auflage auf dem Okulargehäuse auf. Die senkrechte Ausrichtung der Klemmvorrichtung zur optischen Achse wird auf diese Weise erleichtert und eine schräge bzw. verkippte Fehlmontage der Vorrichtung wirksam verhindert.

Durch eine am Außenzylinder senkrecht zur optischen Achse angeflanschte Grundplatte, auf der die Klemmvorrichtung angeordnet ist, wird die exakt senkrechte Ausrichtung eines Bildaufnahmegeräts zur optischen Achse des Okulargehäuses in vorteilhafter Weise erleichtert.

In einer besonderen Ausgestaltung der Vorrichtung sind in die Grundplatte zwei drehbar gelagerte und tangential zum Außenzylinder zueinander fluchtende Gewindespindeln mit ortsfesten Enden als Verstellmittel der Klemmvorrichtung integriert. Auf diese Weise werden eine besonders kompakte Baugröße und eine dosierte Klemmkraftausübung ermöglicht.

In vorteilhafter Weise sind die zwei Gewindespindeln unabhängig voneinander durch Spindelknöpfe zur geradegeführten individuellen Verstellung von auf der Grundplatte angeordneten Klemmbacken betätigbar. Auf diese Weise ist eine individuelle Einstellung des Abstandes der Klemmbacken zur Klemmung verschiedenster Gehäuseformen möglich. Die Positionierung des Aufnahmeobjektivs der Bildaufnahmevorrichtung zur optischen Achse des Okulargehäuses gestaltet sich einfach.

Die Vorrichtung zeichnet sich insbesondere dadurch aus, dass in die Klemmbacken integrierte gummieelastische, rutschfeste Klemmkissen vorgesehen sind. Auf diese Weise wird einerseits eine Beschädigung des Bildaufnahmegehäuses durch unbeabsichtigtes, zu kräftiges Verstellen der Klemmbacken verhindert, andererseits wird einem Herausrutschen der Bildaufnahmevorrichtung aufgrund zu leicht angezogener Klemmbacken entgegengewirkt.

Als besonders vorteilhaft und kostengünstig hat sich die Fertigung der Zylinder aus einem Kunststoffwerkstoff z.B. POM herausgestellt. Auf diese Weise wird störenden Schleif-Schiebegeräuschen beim Verstellen der Zylinder zueinander entgegengewirkt. Verbleibende störende Geräusche lassen sich wirksam durch Anbringen von Gleitpads aus filz- oder samtartigem Material entweder auf der Außenfläche des Innenzylinders oder der Innenfläche des Außenzylinder vermeiden.

In vorteilhafter Weise wird Verspannungen zwischen dem Innenzylinder und dem Außenzylinder entgegengewirkt, indem einer der beiden Zylinder aus Aluminium gefertigt ist. Insbesondere die Ausführung des Innenzylinders aus Aluminium hat sich als formstabil herausgestellt, um die Kräfte der Okular- Schraubklemmverbindung aufnehmen zu können.

Die Erfindung wird nachfolgend anhand eines in der Zeichnung schematisch dargestellten Ausführungsbeispiels beschrieben und näher erläutert.

Dabei zeigen:
- Fig. 1: eine Vorrichtung zur Befestigung in einer seitlichen Ansicht,
- Fig. 2: eine Ansicht von der Okularseite her senkrecht auf den Innenzylinder,
- Fig. 3: eine Aufsicht auf die Klemmvorrichtung und
- Fig. 4: einen Stufenschnitt sowohl durch die Klemmvorrichtung als auch durch den Außen- und Innenzylinder.

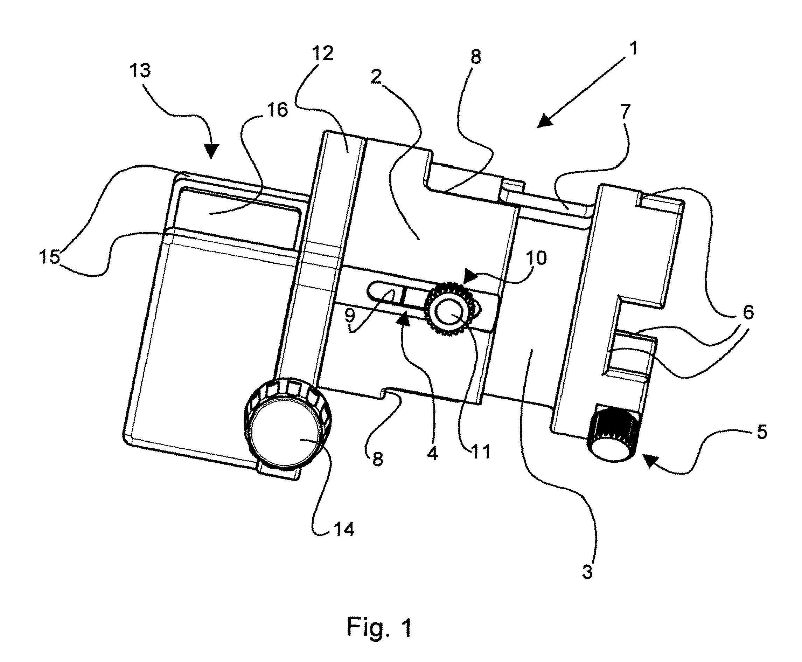

Fig. 1 zeigt bei einer Vorrichtung 1 zur Befestigung unterschiedlicher, nicht weiter dargestellter Bildaufnahmegeräte einen Außenzylinder 2, der auf einem Innenzylinder 3 in einer Geradführung 4 verschiebbar gelagert ist. Der Innenzylinder 3 ist an seinem einen Ende (okularseitig) durch eine Okular-Schraubklemmverbindung 5 an einem nicht weiter dargestellten Okulargehäuse eines Beobachtungsfernrohrs befestigbar. Zur senkrechten oder horizontalen Ausrichtung der Vorrichtung 1 zu den Bildkanten sind am Innenzylinder 3 okularseitig jeweils um 90° auf dem Zylinderumfang versetzt angeordnete Orientierungsausnehmungen 6 vorgesehen.

Zur Verstellung eines Zoom-Okulars weist der Innenzylinder 3 Bedienöffnungen 7 auf. Im Bereich dieser Bedienöffnungen 7 sind im Außenzylinder 2 korrespondierende Ausnehmungen 8 vorgesehen.

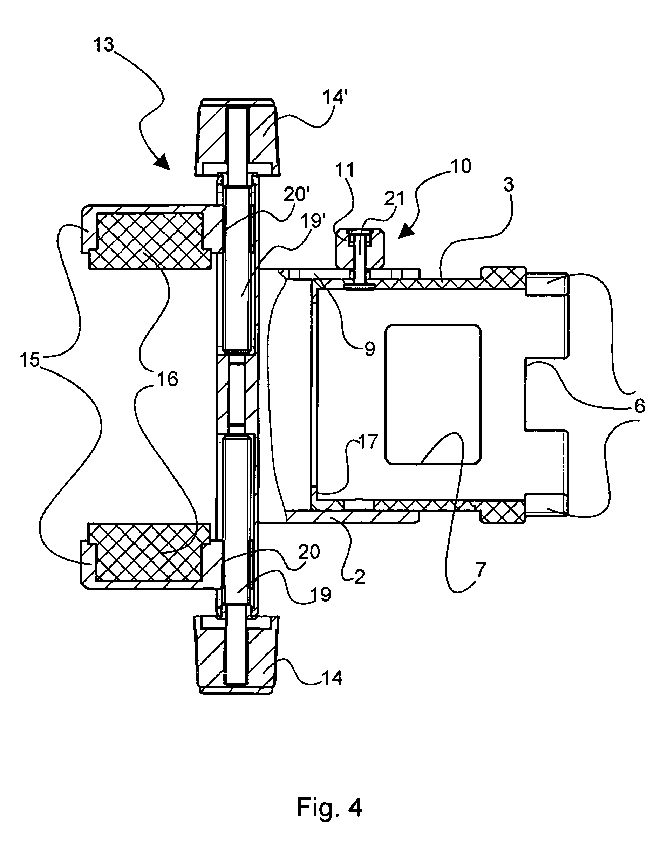

Die Geradführung 4 wird durch eine Stift-Schlitzanordnung gebildet, bei der ein in Fig. 4 dargestellter, in dem Innenzylinder 3 befestigter Gewindestift 21 in einem in dem Außenzylinder 2 parallel zu dessen Achse verlaufenden Schlitz 9 geführt ist. Mittels einer eine Schraubklemmverbindung 10 bildenden Feststellmutter 11 kann der Außenzylinder 2 in variierbaren Auszugsstellungen gegen den Innenzylinder 3 verklemmt werden.

Am Außenzylinder 2 ist senkrecht zu dessen Achse eine Grundplatte 12 angeflanscht. Auf der Grundplatte 12 ist eine Klemmvorrichtung 13 seitlich zur Zylinderachse versetzt angeordnet. Die Betätigung der Klemmvorrichtung 13 erfolgt mittels Drehen von Spindelknöpfen 14, welche zwei Klemmbacken 15 unabhängig voneinander aufeinander zu bewegen können. In die Klemmbacken 15 sind gummielastische rutschfeste Klemmkissen 16 integriert.

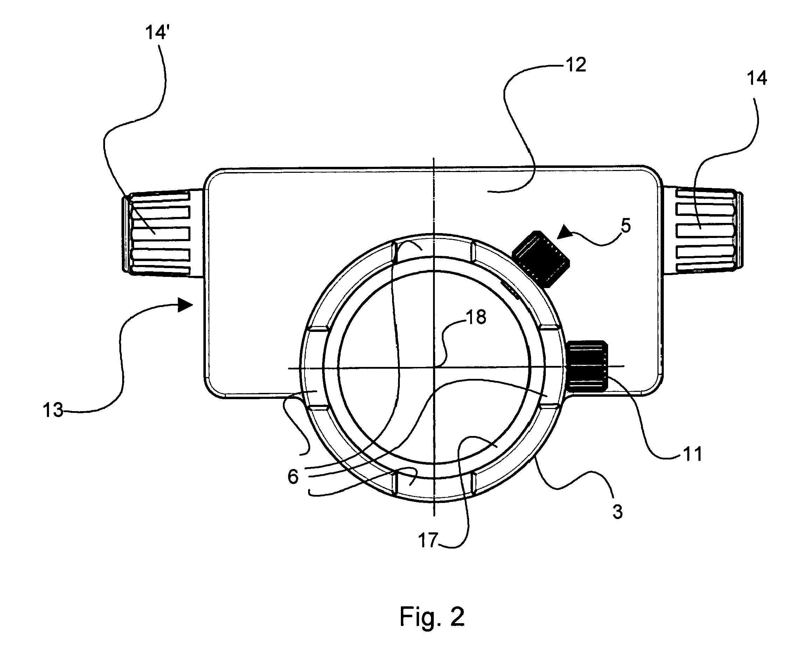

In Fig. 2 ist eine Ansicht von der Okularseite her senkrecht auf den Innenzylinder 3 dargestellt. Vier Orientierungsausnehmungen 6 sind symmetrisch auf dem Umfang des Innenzylinders 3 angeordnet. Eine ins Zylinderinnere überstehende Randfläche 17 dient zur Auflage auf einem Okulargehäuse. Ein Kreuz zeigt schematisch die Lage der Zylinderachse 18 und verdeutlicht die seitlich versetzt dazu angeordnete Grundplatte 12. An der Grundplatte 12 befinden sich links und rechts die Spindelknöpfe 14, 14' zur Betätigung der hier nicht weiter sichtbaren Klemmvorrichtung 13.

Ebenfalls dargestellt sind die Lage der Feststellmutter 11 und die der Okular- Schraubklemmverbindung 5.

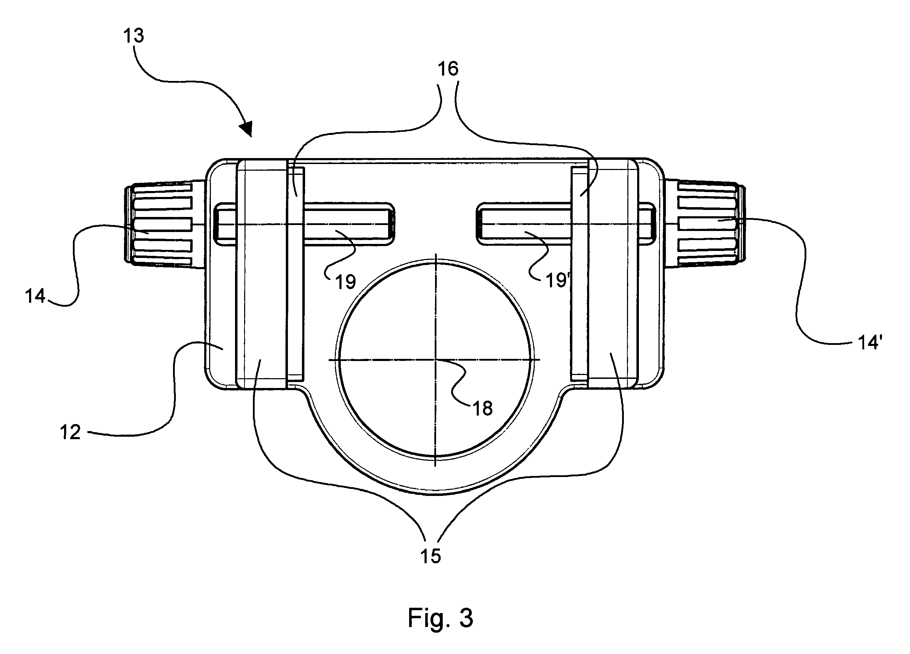

Fig. 3 zeigt die Einzelteile der Klemmvorrichtung 13 in einer Aufsicht. Seitlich zur Zylinderachse 18 versetzt angeordnet ist die Grundplatte 12, in der zwei drehbar gelagerte und zueinander fluchtende Gewindespindeln 19, 19' integriert sind. Auf den Gewindespindeln 19, 19' sind die Klemmbacken 15 (vergl. die in Fig. 4 dargestellten Gewindelöcher 20, 20') relativ zueinander verschiebbar gelagert. Durch Drehen der Spindelknöpfe 14, 14' werden die Gewindespindeln 19, 19' in Drehbewegung versetzt. Auf diese Weise sind die Klemmbacken 15 mit ihren Klemmkissen 16 unabhängig voneinander bewegbar.

Zur weiteren Verdeutlichung der Funktionsweise ist in Fig. 4 ein Stufenschnitt einerseits durch die Klemmvorrichtung 13 und andererseits durch den Außen- und Innenzylinder 2, 3 dargestellt. Die Klemmkissen 16 sind in die Klemmbacken 15 eingelagert. Durch Drehen an den Spindelknöpfen 14, 14' werden die Gewindespindeln 19, 19' in Drehbewegung versetzt und nehmen über Gewindelöcher 20, 20' die Klemmbacken 15 in einer Zwangsführung mit. Die Klemmvorrichtung 13 ist an den Außenzylinder 2 angeflanscht. In dem Außenzylinder 2 ist der Innenzylinder 3 verschiebbar gelagert.

Am Innenzylinder sind die Orientierungsausnehmungen 6 und die Bedienöffnung 7 ausgespart. Im Innenbereich ist die Randfläche 17 angeformt. Ein Gewindestift 21 ist am Innenzylinder 3 befestigt und bildet zusammen mit dem Schlitz 9 im Außenzylinder 2 eine Geradführung, die durch die Feststellmutter 11 klemmbar ist.

### Bezugszeichenliste

- 1: Vorrichtung zur Befestigung von Bildaufnahmegeräten an einem Beobachtungsfernrohr
- 2: Außenzylinder
- 3: Innenzylinder
- 4: Geradführung
- 5: Okular- Schraubklemmverbindung
- 6: Orientierungsausnehmungen
- 7: Bedienöffnungen
- 8: Ausnehmungen
- 9: Schlitz
- 10: Schraubklemmverbindung
- 11: Feststellmutter
- 12: Grundplatte
- 13: Klemmvorrichtung
- 14,14': Spindelknöpfe
- 15: Klemmbacken
- 16: Klemmkissen
- 17: Randfläche
- 18: Zylinderachse
- 19,19': Gewindespindeln
- 20,20': Gewindelöcher
- 21: Gewindestift

## Patentansprüche

1. Vorrichtung (1) zur Befestigung unterschiedlicher Bildaufnahmegeräte an einem Beobachtungsfernrohr mit auswechselbaren Okularen, **dadurch gekennzeichnet, dass** die Vorrichtung (1) zwei zueinander koaxial gelagerte, axial verschiebbar geführte Zylinder (2,3) aufweist, wobei der eine Zylinder (3) am Okulargehäuse oder über eine das Okulargehäuse umschließende Adaptervorrichtung am Gehäuse des Beobachtungsfernrohrs befestigbar ist und der andere Zylinder (2) zur Halterung eines Bildaufnahmegeräts eine seitlich zur Zylinderachse versetzt angeordnete Klemmvorrichtung (13) aufweist.

2. Vorrichtung (1) nach Patentanspruch 1, **dadurch gekennzeichnet, dass** der die Klemmvorrichtung (13) tragende Zylinder als Außenzylinder (2) auf einem am Okulargehäuse befestigbarem Innenzylinder (3) gerade geführt ist.

3. Vorrichtung (1) nach Patentanspruch 2, **dadurch gekennzeichnet, dass** der Außenzylinder (2) in variierbaren Auszugsstellungen am Innenzylinder (3) feststellbar ist.

4. Vorrichtung (1) nach Patentanspruch 3, **dadurch gekennzeichnet, dass** zur Feststellung eine erste Schraubklemmverbindung (10) mit einer den Außenzylinder (2) gegen den Innenzylinder (3) klemmenden Feststellmutter (11) vorgesehen ist.

5. Vorrichtung (1) nach Patentanspruch 4, **dadurch gekennzeichnet, dass** der Innenzylinder (3) okularseitig eine oder mehrere auf dem Umfang angeordnete Orientierungsausnehmungen (6) und/oder eine weitere Schraubklemmvorrichtung (5) zur Befestigung am Okulargehäuse aufweist.

6. Vorrichtung (1) nach Patentanspruch 5, **dadurch gekennzeichnet, dass** am Innenzylinder (3) eine oder mehrere Bedienöffnungen (7) zur Verstellung eines Zoom-Okulars vorgesehen sind.

7. Vorrichtung (1) nach Patentanspruch 6, **dadurch gekennzeichnet, dass** der Innenzylinder (3) an seinem dem Außenzylinder (2) zugeordneten Ende eine nach innen überstehende Randfläche (17) zur Auflage auf dem Okulargehäuse aufweist.

8. Vorrichtung (1) nach einem der vorherigen Patentansprüche, **dadurch gekennzeichnet, dass** am Außenzylinder (2) eine senkrecht zur optischen Achse angeflanschte Grundplatte (12) vorgesehen ist, auf der die Klemmvorrichtung (13) angeordnet ist.

9. Vorrichtung (1) nach Patentanspruch 8, **dadurch gekennzeichnet, dass** in die Grundplatte (12) zwei drehbar gelagerte und tangential zum Außenzylinder (2) zueinander fluchtende Gewindespindeln (19,19') mit ortsfesten Enden als Verstellmittel der Klemmvorrichtung (13) integriert sind.

10. Vorrichtung (1) nach Patentanspruch 9, **dadurch gekennzeichnet, dass** die zwei Gewindespindeln (19,19') unabhängig voneinander durch Spindelknöpfe (14,14') zur geradegeführten individuellen Verstellung von auf der Grundplatte (12) angeordneten Klemmbacken (15) betätigbar sind.

11. Vorrichtung (1) nach Patentanspruch 10, **dadurch gekennzeichnet, dass** in die Klemmbacken (15) integrierte gummielastische, rutschfeste Klemmkissen (16) vorgesehen sind.
